# EUROPÄISCHE PATENTSCHRIFT

(11) **EP 0 407 713 B1**
(45) Veröffentlichungstag und Bekanntmachung des Hinweises auf die Patenterteilung: **23.03.1994**
(21) Anmeldenummer: 90109745.1
(22) Anmeldetag: 22.05.1990
(51) Int. Cl.: B01D 46/00

(54) **Verfahren und Vorrichtung zum Abtrennen von Feststoff aus einem Gas**
Process and device for separating a solid from a gas
Procédé et dispositif pour l'élimination de solides d'un gas

(30) Priorität: 11.07.1989 DE 3922764
(43) Veröffentlichungstag der Anmeldung: 16.01.1991
(73) Patentinhaber: DEUTSCHE BABCOCK ENERGIE- UND UMWELTTECHNIK AKTIENGESELLSCHAFT, 46049 Oberhausen (DE)
(72) Erfinder: Meier, Hans-Joachim, D-4234 Alpen-Menzelen (DE); Wiehn, Helmut, Dr., D-4200 Oberhausen 1 (DE); Rehwinkel, Heiko, Dr., D-4250 Bottrop (DE); Möllenhoff, Horst, Dr., D-4330 Mülheim/Ruhr (DE)
(74) Vertreter: Müller, Jürgen, Dipl.-Ing.

(56) Entgegenhaltungen:
- DE-A- 3 307 011
- DE-A- 3 408 627
- DE-A- 3 412 930
- US-A- 3 867 116

## Beschreibung

Die Erfindung betrifft ein Verfahren und eine Vorrichtung zum Abtrennen von Feststoff aus einem heißen Gas mit den Merkmalen des Oberbegriffes der Ansprüche 1 und 5.

Eine derartige Vorrichtung ist aus der DE-OS 34 08 627 bekannt. Bei dieser Vorrichtung muß der aus dem heißen Gas abgetrennte Feststoff nach Abzug aus dem Sammelbunker außerhalb des Abscheiders gekühlt werden, bevor er anschließend entsorgt werden kann.

Aus der DE-C- 26 24 302 ist ein Verfahren zur Verbrennung von Brennstoffen in einer zirkulierenden Wirbelschicht bekannt, bei dem der Feststoff aus dem Rauchgas durch einen Zyklonabscheider abgetrennt wird. Der abgetrennte Feststoff wird einem Fließbettkühler zugeführt, in dem er durch Luft direkt und durch Heizflächen indirekt gekühlt wird. Bei dem bekannten Verfahren sind getrennte Aggregate für das Abtrennen des Feststoffes und das Kühlen des abgetrennten Feststoffes erforderlich.

Die US-A-3 867 116 zeigt einen Abscheider, in dessen unterem Teil ein Sammelraum für den abgeschiedenen Festoff angeordnet ist. In den Sammelraum wird Luft eingeblasen, die die Aufgabe hat, den Festoff in einen fluidisierten Zustand zu versetzen. Auf dieser Weise wird erreicht, daß der Festoff, ohne daß er gekühlt wird, über einen Austrittskanal ausfließen kann.

Der Erfindung liegt die Aufgabe zugrunde, das gattungsgemäße Abtrennen von Feststoff aus einem heißen Gas so zu gestalten, daß der apparative Aufwand für das Abtrennen des Feststoffes, das Kühlen und das Einleiten des Transportvorganges verringert wird.

Diese Aufgabe wird bei einem gattungsgemäßen Verfahren erfindungsgemäß durch die kennzeichnenden Merkmale des Anspruches 1 gelöst. Eine Vorrichtung zur Durchführung des Verfahrens ist durch den Anspruch 5 gekennzeichnet. Vorteilhafte Ausgestaltungen der Erfindung sind in den Unteransprüchen angegeben.

Bei dem erfindungsgemäßen Verfahren bzw. in der erfindungsgemäßen Vorrichtung wird der abgeschiedene Feststoff mit Hilfe des in den unteren Teil des Sammelbunkers eingeblasenen Gases gekühlt. Dabei erreicht der Feststoff eine Temperatur, bei der er ohne besondere Vorkehrungen transportiert werden kann. Das sich erwärmende Kühlgas wird in dem gleichen Abscheider gefiltert wie das zu reinigende Rohgas, wobei von dem Kühlgas mitgerissene Feststoffpartikel in den Sammelbunker zurückfallen. Über den Wärmetausch mit dem heißen Feststoff nimmt das Kühlgas nahezu die Temperatur des zu reinigenden Rohgases an und kann mit diesem zusammen dem gleichen Verwendungszweck zugeführt werden. Durch die Anwendung eines nicht zentrifugalen Abscheiders wird erreicht, daß die Abscheideleistung nicht wie bei einem Zentrifugalabscheider durch die Gegenströmung des eingeblasenen Kühlgases beeinträchtigt wird. Auf diese Weise gelingt es, die Funktionen des Abtrennens, des Kühlens und des Einleitens des Transportvorganges in einer einzigen Apparatur durchzuführen.

Die Erfindung läßt sich einsetzen für die Heißreinigung, vor allem von unter Druck stehenden Gasen, so z. B. für die Reinigung von Rauchgas, das durch Verbrennen von fossilen Brennstoffen in einer Druckwirbelschichtfeuerung entstanden ist, ferner für Gase aus katalytischen Crackprozessen, für Abgase aus metallurgischen Prozessen, z. B. aus der Stahlerzeugung nach den Sauerstoffaufblasverfahren sowie für andere heiße Gase.

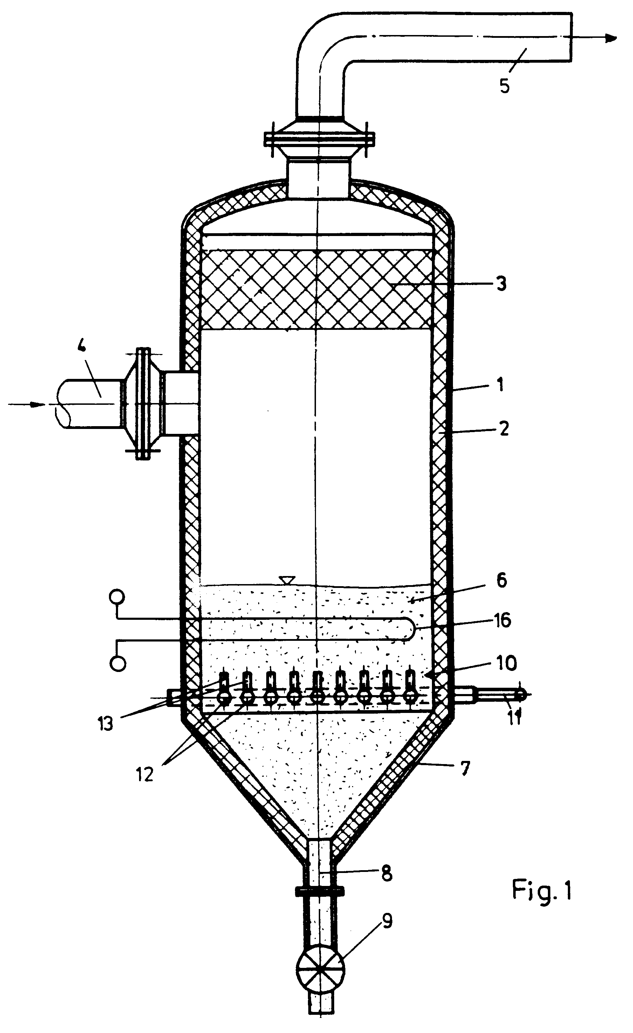

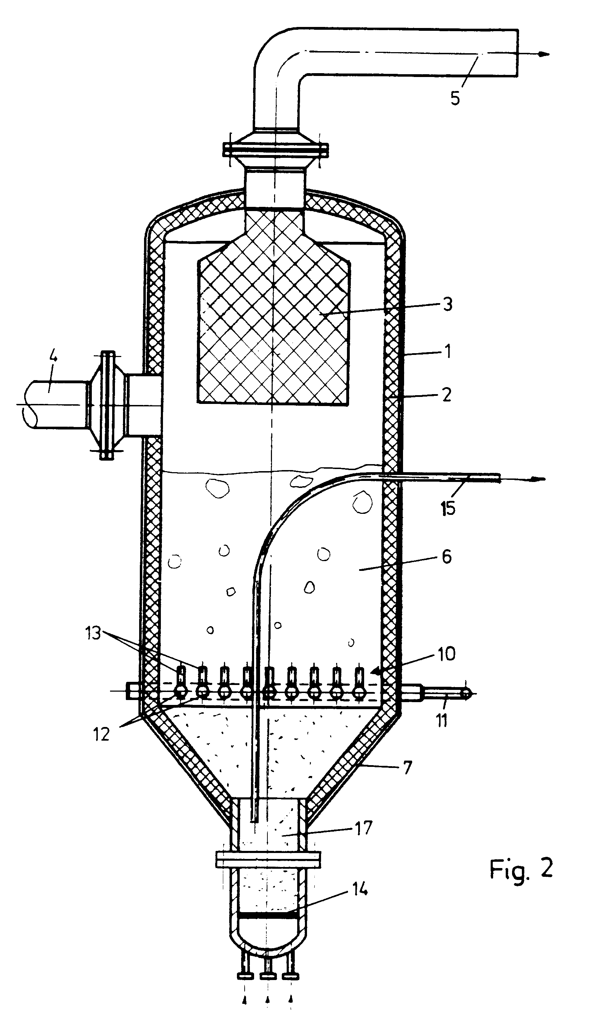

Mehrere Ausführungsbeispiele der Erfindung sind in der Zeichnung dargestellt und werden im folgenden näher erläutert. Die Figuren 1 und 2 zeigen jeweils im Längsschnitt eine Ausführungsform einer Vorrichtung zur Abscheidung von Feststoff.

Eine Vorrichtung zum Abtrennen von Feststoffen aus einem heißen, staubbeladenen Gas besteht aus einem Behälter 1. Für den Fall, daß unter Druck stehende Gase zu reinigen sind, ist der Behälter 1 als Druckgefäß ausgebildet. Der Behälter 1 ist innen mit einer wärmeisolierenden Verkleidung 2 versehen. In dem oberen Teil des Behälters 1 ist ein Abscheider 3 angeordnet, der in der Zeichnung nicht näher dargestellt ist. Der Abscheider 3 ist von nicht zentrifugaler Bauart. Vorzugsweise wird an dieser Stelle ein Abscheider mit als Filterkerzen ausgebildeten Abscheideelementen eingesetzt. Die Filterkerzen sind aus einem gasdurchlässigen, keramischen Material hergestellt und vorzugsweise einseitig geschlossen. Diese Abscheideelemente sind in einer Haltevorrichtung befestigt, die an dem Behälter 1 abgestützt ist. Anstelle eines solchen Kerzenfilters können auch andere nicht zentrifugale Heißgasfilter, z. B. Schüttschichtfilter, eingesetzt werden.

Eine Gaszuführungsleitung 4, die an eine Heißgasquelle angeschlossen ist, mündet in den Behälter 1 ein. Von dem Behälter 1 geht eine Gasabführungsleitung 5 aus, die zu einer Reingasleitung führt. In dem Strömungsweg zwischen der Gaszuführungsleitung 4 und der Gasabführungsleitung 5 liegen die Abscheideelemente des Abscheiders 3.

Der unterhalb des Abscheiders 3 liegende Teil des Innenraumes des Behälters 1 ist als Sammelbunker 6 ausgebildet, in dem der Feststoff sich ansammelt, der beim Durchtritt des Gases durch den Abscheider 3 abgetrennt wird. Der untere Teil des Sammelbunkers 6 ist als Trichter 7 ausgebildet, der nach Fig. 1 in eine Austragsleitung 8 übergeht. In der Austragsleitung 8 ist ein mechanisches Austragsorgan angeordnet, das aus einer Zellradschleuse 9 oder einer Förderschnecke bestehen kann.

In dem Sammelbunker 6 ist oberhalb des Trichters 7 ein Anströmboden 10 angeordnet, der mit einer Zuführungsleitung 11 verbunden ist. Der Anströmboden 10 besteht aus einem Rost von mit Abstand voneinander angeordneten Rohren 12, die mit Düsen 13 versehen sind. Luft oder ein anderes Gas, das durch den Anströmboden 10 eingeblasen wird, tritt nach dem Durchströmen der in dem Sammelbunker 6 angesammelten Feststoffschicht gemeinsam mit dem von dem Feststoff befreiten Gas durch den Abscheider 3 und das Gasabführungsrohr 5 aus und wird dem Reingasverwendungszweck zugeführt. Der Druck des Gases am Eintritt in den Anströmboden 10 ist um den durch die Feststoffschicht in dem Sammelbunker 6 bedingten Druckverlust größer als der Druck des durch die Gaszuführungsleitung 4 eintretenden Gases. Je nach Menge und Geschwindigkeit des eingeblasenen Gases bildet sich oberhalb des Anströmbodens 10 ein Festbett oder ein Wirbelbett.

Die durch den Düsenboden 10 eingeblasene Gasmenge ist so bemessen, daß das Gas nach dem Durchströmen der in dem Sammelbunker 6 vorhandenen Feststoffschicht nahezu die Temperatur des durch die Gaszuführungsleitung 4 eintretenden Gases angenommen hat. Der Feststoff ist beim Eintritt in den Trichter 7 unterhalb des Anströmbodens 10 weitgehend abgekühlt und kann direkt entsorgt werden.

Wie in Fig. 2 gezeigt ist, kann anstelle eines mechanischen Austragsorgans eine Dichtstromförderung verwendet werden. Zu diesem Zweck ist unterhalb des Trichters 7 ein Auflockerungsraum 17 mit einem weiteren Anströmboden 14 angeordnet. Dieser Anströmboden 14 wird von unten derart mit Luft oder einem anderen Gas beaufschlagt, daß die auf dem Anströmboden 14 ruhende Feststoffschicht partiell fluidisiert wird. In diese partiell fluidisierte Feststoffschicht ragt eine Förderleitung 15 hinein, die an einen Raum geringeren Druckes angeschlossen ist. Über diese Förderleitung 15 tritt der Feststoff aus.

Sollte die durch die Düsen 13 eingeblasene Gasmenge nicht ausreichen, die in dem Sammelbunker 6 vorhandene Feststoffschicht zu kühlen, so kann in dem Sammelbunker 6 ein Wärmeaustauschrohrbündel 16 angeordnet werden, das von einem flüssigen oder gasförmigen Medium wie Wasser, Dampf, Luft, Gas, Thermoöl oder Flüssigmetall durchströmt ist. Auf diese Weise wird der Feststoff indirekt gekühlt.

## Patentansprüche

1. Verfahren zum Abtrennen von Feststoff aus einem Gas in einem nicht zentrifugalen Abscheider, wobei der abgetrennte Feststoff in einem Sammelbunker unterhalb des Abscheiders aufgefangen und das Gas nach dem Durchtritt durch den Abscheider abgeführt wird und wobei der Feststoff innerhalb des Sammelbunkers von einem Gas, insbesondere von Luft, durchströmt wird und das in den Sammelbunker eingeblasene Gas zusammen mit dem von dem Feststoff befreiten Gas durch den Abscheider geführt wird, wobei der Abscheider mit einem heißen, vorzugsweise unter Druck stehenden Gas beaufschlagt wird, der Feststoff durch das in Sammelbunker eingeblasene Gas direkt gekühlt wird und das dabei aufgeheizte Gas durch den Abscheider abgeführt wird.

2. Verfahren nach Anspruch 1, dadurch gekennzeichnet, daß der abgetrennte Feststoff in dem Sammelbunker als Festbett von dem Gas durchströmt wird.

3. Verfahren nach Anspruch 1, dadurch gekennzeichnet, daß der abgetrennte Feststoff durch das eingeblasene Gas fluidisiert wird.

4. Verfahren nach einem der Ansprüche 1 bis 3, dadurch gekennzeichnet, daß der Feststoff in dem Sammelbunker zusätzlich indirekt durch ein gasförmiges oder flüssiges Medium gekühlt wird.

5. Vorrichtung zum Abtrennen von Feststoff aus einem heißen, vorzugsweise unter Druck stehenden Gas, bestehend aus einem Behälter (1), der mit einer oder mehreren Gaszuführungsleitungen (4) und einer oder mehreren Gasabführungsleitungen (5) verbunden ist und in dessen oberem Teil ein Abscheider (3) von nicht zentrifugaler Bauart und in dessen unterem Teil ein Sammelbunker (6) mit einem Austragsorgan angeordnet ist, wobei in dem Sammelbunker (6) Düsen (13) für die Zuführung eines Gases, insbesondere von Luft, angeordnet sind und die Gasabführungsleitung (5) von dem von dem Feststoff befreiten Gas und von dem durch die Düsen (13) eingeblasenen Gas gemeinsam durchströmt ist, und wobei in dem Samelbunker (6) ein von einem gasförmigen oder flüssigen Medium durchströmtes Wärmeaustauschrohrbündel (16) angeordnet ist.

6. Vorrichtung nach Anspruch 5, dadurch gekennzeichnet, daß in dem Sammelbunker (6) ein von Gas durchströmtes Festbett vorhanden ist.

7. Vorrichtung nach Anspruch 5, dadurch gekennzeichnet, daß in dem Sammelbunker (6) ein von Gas durchströmtes Wirbelbett vorhanden ist.

8. Vorrichtung nach einem der Ansprüche 5 bis 7, dadurch gekennzeichnet, daß das Austragsorgan ein mechanisches Austragsorgan (9) ist.

9. Vorrichtung nach einem der Ansprüche 5 bis 7, dadurch gekennzeichnet, daß in dem Sammelbunker (6) unterhalb der Düsen (10) eine partiell fluidisierte Schicht aufrechterhalten ist, in die eine Förderleitung (15) hineinragt, die an einen Raum geringeren Druckes angeschlossen ist.

## Claims

1. Method for the separation of solid substance out of a gas in a non-centrifugal separator, wherein the separated solid substance is collected in a collecting bunker underneath the separator and the gas is conducted away after the passage through the separator and wherein the solid substance within the collecting bunker is flowed through by gas, in particular by air, and the gas blown into the collecting bunker is conducted through the separator together with the gas freed of the solid substance, wherein the separator is charged with a hot gas which preferably stands under pressure, the solid substance is cooled directly by the gas blown into the collecting bunker and the gas heated in that case is conducted away through the separator.

2. Method according to claim 1, characterised thereby, that the separated solid substance in the collecting bunker is flowed through by the gas as solid bed.

3. Method according to claim 1, characterised thereby, that the separated solid substance is fluidised by the gas that is blown in.

4. Method according to one of the claims 1 to 3, characterised thereby, that the solid substance in the collecting bunker is additionally cooled indirectly by a gaseous or liquid medium.

5. Device for the separation of solid substance out of a hot gas which preferably stands under pressure and consisting of a container (1), which is connected with one or more gas feed ducts (4) and one or more gas discharge ducts (5) and in the upper part of which a separator (3) of non-centrifugal mode of construction is arranged and in the lower part of which a collecting bunker (6) with a discharge organ is arranged, wherein nozzles (13) for the feed of a gas, in particular of air, are arranged in the collecting bunker (6) and the gas discharge duct (5) is flowed through in common by the gas freed of the solid substance and by the gas blown in through the nozzles (13) and wherein a heat exchanger tube nest (16), which flowed through by a gaseous or liquid medium, is arranged in the collecting bunker (6).

6. Device according to claim 5, characterised thereby, that a solid bed flowed through by gas is present in the collecting bunker (6).

7. Device according to claim 5, characterised thereby, that a fluidised bed flowed through by gas is present in the collecting bunker (6).

8. Device according to one of the claims 5 to 7, characterised thereby, that the discharge organ is a mechanical discharge organ (9).

9. Device according to one of the claims claim 5 to 7, characterised thereby, that a partially fluidised layer, into which a conveying duct (15) projects, which is connected to a chamber of lower pressure, is maintained underneath the nozzles (13) in the collecting bunker (6).

## Revendications

1. Procédé de séparation de solides à partir d'un gaz dans un séparateur non centrifuge, les solides séparés étant captés dans une trémie collectrice située au-dessous du séparateur et le gaz étant évacué après passage dans le séparateur, et les solides étant soumis, à l'intérieur de la trémie collectrice, au flux d'un gaz, en particulier d'air, et le gaz injecté dans la trémie collectrice conjointement avec le gaz débarrassé des solides étant guidé à travers le séparateur, le séparateur étant exposé à un gaz chaud, de préférence sous pression, les solides étant refroidis directement au moyen du gaz injecté dans la trémie collectrice et le gaz alors chauffé étant évacué à travers le séparateur.

2. Procédé selon la revendication 1, caractérisé en ce que les solides séparés sont traversés, à titre de lit fixe, dans la trémie collectrice, par un flux de gaz.

3. Procédé selon la revendication 1, caractérisé en ce que les solides séparés sont fluidisés au moyen du gaz insufflé.

4. Procédé selon l'une des revendications 1 à 3, caractérisé en ce que les solides séparés situés dans la trémie collectrice, sont en plus refroidis indirectement au moyen d'un milieu gazeux ou liquide.

5. Dispositif de séparation de solides, à partir d'un gaz chaud, de préférence sous pression, composé d'un récipient (1), relié à une ou plusieurs conduites d'amenée de gaz (4) et à une ou plusieurs conduites d'évacuation de gaz (5), et dans la partie supérieure duquel est disposé un séparateur (3), d'un type non centrifuge, et dans la partie inférieure duquel est disposée une trémie collectrice (6) avec un organe d'évacuation, des buses (13) étant disposées dans la trémie collectrice (6) en vue d'amener un gaz, en particulier de l'air, et la conduite d'évacuation de gaz (5) étant parcourue conjointement par un flux de gaz débarrassé des solides et par du gaz insufflé par les buses (13), et un faisceau tubulaire d'échange de chaleur (16) parcouru par un milieu gazeux ou liquide étant disposé dans la trémie collectrice (6).

6. Dispositif selon la revendication 5, caractérisé en ce qu'un lit fixe, parcouru par un flux de gaz, se trouve dans la trémie collectrice (6).

7. Dispositif selon la revendication 5, caractérisé en ce qu'un lit fluidisé parcouru par un flux de gaz existe dans la trémie collectrice (6).

8. Dispositif selon l'une des revendications 5 à 7, caractérisé en ce que l'organe d'évacuation est un organe d'évacuation (9) mécanique.

9. Dispositif selon l'une des revendications 5 à 7, caractérisé en ce qu'une couche en fluidisation partielle, dans laquelle pénètre un conduit (15) raccordé à un espace soumis à moindre pression, est introduit dans la trémie collectrice (6) en dessous des buses (10).
